Europäisches Patentamt

**European Patent Office**

Office européen des brevets

(19)

(11) Publication number: **0 164 897**
'A2

(12) **EUROPEAN PATENT APPLICATION**

(21) Application number: 85303296.9

(22) Date of filing: 09.05.85

(51) Int. Cl.⁴: C 02 F 1/00
C 02 F 1/76

(30) Priority: 09.05.84 ZA 843488

(43) Date of publication of application:
18.12.85 Bulletin 85/51

(84) Designated Contracting States:
DE FR GB

(71) Applicant: CONTROLLED WATER AND SEWAGE
EQUIPMENT (PTY) LTD.
10 Winter Ave.
Bedfordview Transvaal Province 2008(ZA)

(72) Inventor: Willows, Reginald
19 A Kloof Rd.
Bedfordview, 2008 Transvaal Province(ZA)

(74) Representative: Dixon, Donald Cossar et al,
Gee & Co. Chancery House Chancery Lane
London WC2A 1QU(GB)

(54) Liquid dosing apparatus.

(57) Apparatus for dosing a liquid flow is disclosed. Controlled dosing of liquid flowing in a pipeline (52) is achieved by creating a pressure differential in the pipeline, and applying the pressure differential to a collapsible bladder (30) containing a dosant liquid to cause the bladder to collapse and expel its contents into the pipeline. In a practical embodiment, the bladder is spherical when full and is housed in a spherical vessel (10). An adjustable valve (58) in the pipeline produces the desired pressure differential. The vessel and bladder are respectively connected to the pipeline upstream and downstream of the valve.

Fig. 2

EP 0 164 897 A2

Croydon Printing Company Ltd.

-1-

# LIQUID DOSING APPARATUS

THIS invention relates to a dosing apparatus.

There are many situations where it is necessary to dose a liquid flowing in a pipeline with a controlled concentration of dosing liquid. Conventionally, this is commonly achieved with the aid of pumps (of positive displacement or peristaltic type) which inject the dosing liquid into the flow of liquid, or by means of a venturi throat in the pipeline. Both systems have disadvantages. In the case of pumps, there is a requirement for an independent power supply and for constant maintenance, while in the case of a venturi throat, the rate of flow in the pipeline must be high in order to achieve the necessary "vacuum" to draw dosing liquid into the main flow.

Other known dosing systems make use of a pressure differential to expel a dosant liquid from a flexible bladder into a pipeline conveying the liquid which is to be dosed. Examples of systems of this kind are to be found in the following patent specifications : French patent 1.399.749; US patent 3,720,230; US patent 3,166,096; Swiss patent 362857; German patent specification 1 542 294; French patent 1.251.892; US patent 2,932,317 and US patent 3,974,847.

The various apparatuses disclosed in the above-mentioned specifications do, however, exhibit a number of disadvantages, of which the following are important : the pressure differential is created in the pipeline by means of a fixed orifice; and the shapes of the bladders and containers,

are not conducive to equal pressure distribution on the bladder. The use of a fixed orifice means that the apparatus is limited to use in a single application only, not being capable of adjustment to suit desired dosing rates in different applications. The results of using the container and bladder shapes disclosed in the specifications lead to non-uniform collapse of the bladder under the pressure differential and accordingly to inacccurate dosing.

The present invention seeks to alleviate the problems referred to above.

For dosing a liquid flowing in a pipeline with a dosant liquid, the invention provides an apparatus comprising a rigid, hollow, spherical vessel, a collapsible bladder inside the vessel for containing the dosant liquid, the bladder being spherical when full, means for location in the pipeline for creating an adjustable pressure differential across the means when liquid flows in the pipeline, the pressure upstream of the means being greater than the pressure downstream of the means, a first conduit for placing the interior of the vessel outside the bladder in communication with the pipeline upstream of the means, and a second conduit for placing the interior of the bladder in communication with the pipeline downstream of the means so that the pressure differential acts on the bladder to collapse it and expel its contents through the second conduit into the pipeline at a rate dependent on a chosen pressure differential created by the means.

It is preferred that the bladder is adapted to collapse, when subjected to the pressure differential, at a uniform rate. In one embodiment, the bladder comprises a series of panels which are sealed together and which are each defined between curvilinear edges.

There may be a valved outlet from the vessel for the escape of liquid from the vessel, the outlet being situated at a level above that of the operatively lowest point of the vessel. There may also be an air release

valve communicating the interior of the vessel outside the bladder with the ambient atmosphere at a level near to the operatively uppermost point of the vessel.

Preferably, the means for creating the pressure differential in the pipeline includes a squeeze valve. Most preferably, the squeeze valve includes a circular cross-section tube of resilient material for connection into the pipeline, and a squeezing device for varying the flow area through the tube while maintaining the circular cross-section of the tube.

The invention also provides swimming pool chlorination apparatus for use with a swimming pool reticulation system in which water is pumped along a pipeline through a filter, the chlorination apparatus including a rigid, hollow, spherical vessel, a collapsible bladder inside the vessel for containing a chlorinating dosant liquid, the bladder being spherical when full, a first conduit for placing the interior of the vessel outside the bladder in communication with the pipeline upstream of the filter, and a second conduit for placing the interior of the bladder in communication with the pipeline downstream of the filter so that the pressure differential created in the pipeline by the filter acts on the bladder to expel its contents into the pipeline downstream of the filter.

An embodiment of the present invention will now be described, by way of example, with reference to the accompanying drawings in which:

Figure 1    shows a perspective view of a dosing apparatus according to the invention;

Figure 2    shows a cross-sectional view of the apparatus seen in Figure 1, with the bladder full of dosant liquid;

Figure 3    shows a perspective view of the bladder when partially full;

Figure 4    shows a typical valve used in an apparatus of the invention;

Figure 5    shows a detail of the squeezing device used in the valve of Figure 4;

Figure 6      shows a schematic view of apparatus of the invention in use in continuous dosing operations;

Figure 7      shows a schematic view of an alternative continuous dosing apparatus;

Figure 8      shows schematically a solenoid valve for use in the apparatus of Figure 9;

Figure 9      shows a schematic view of an automatic dosing apparatus; and

Figure 10     shows a schematic view of a swimming pool chlorinating system.

In the various Figures, like numerals are used to designate like components.

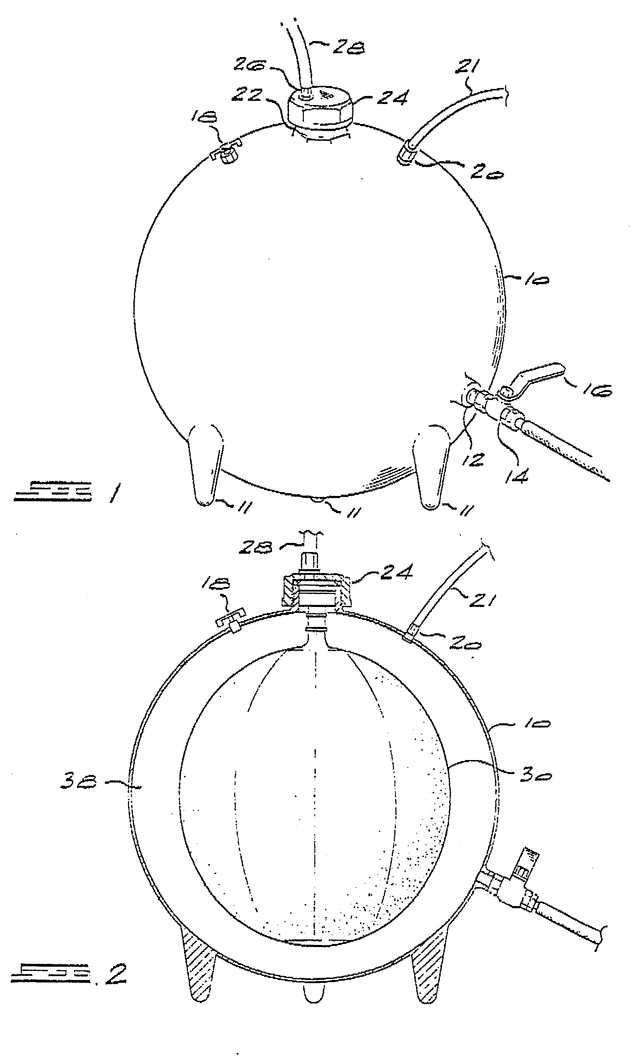

Referring firstly to Figure 1, an apparatus of the invention includes a vessel 10 which is formed of rigid plastics material such as polypropylene and which has a spherical shape. Three legs 11 are formed integrally with the vessel 10 to support it on a level surface.

Some distance above its lowest point, the vessel 10 has an internally threaded outlet 12 into which is screwed a conduit leading to a manually operable ball valve 14 having an operating handle 16.

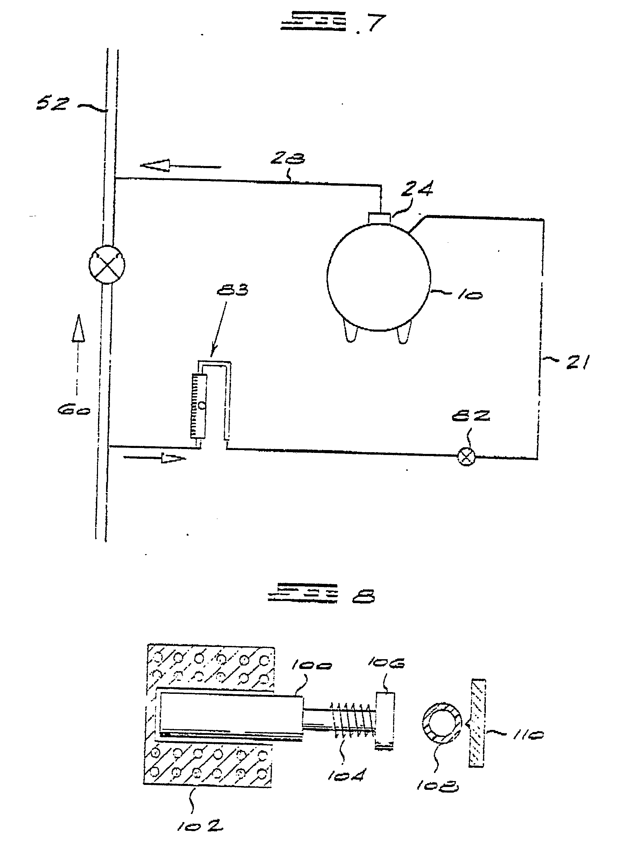

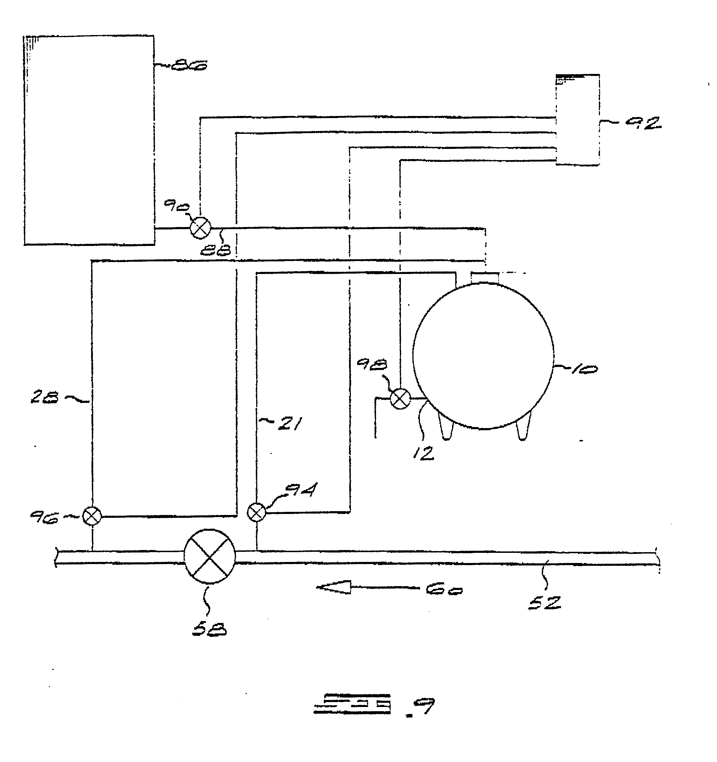

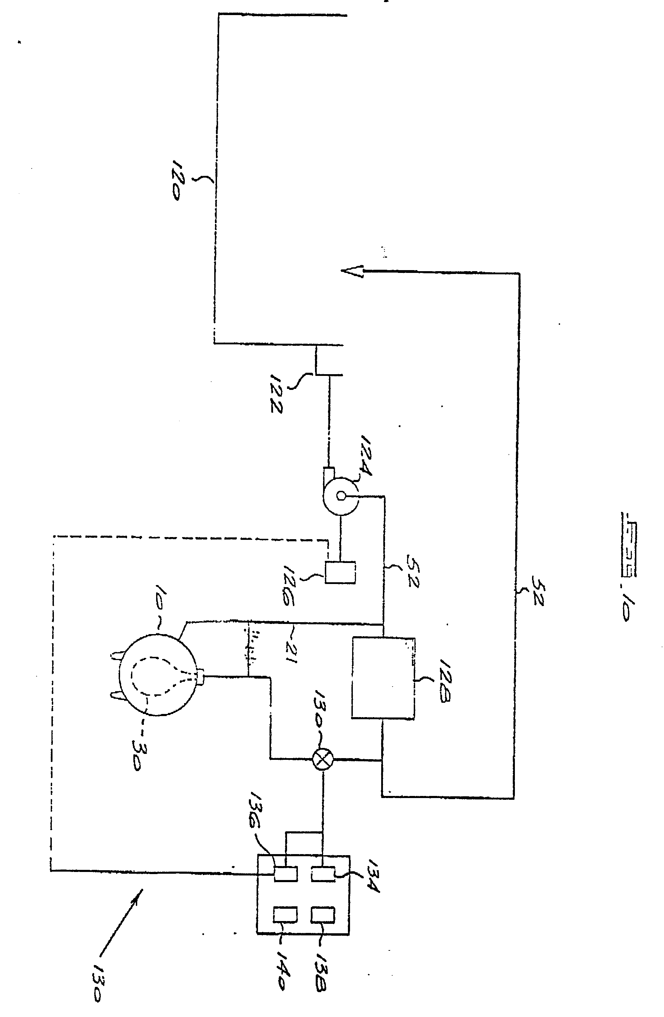

Near to its highest point, the vessel 10 has a conventional, manually operable air release valve 18 which communicates with the interior of the vessel. A nipple 20 is screwed through the wall of the vessel 10 near to its highest point and is of a conventional type suitable for connection of a flexible pressure line 21 leading from a process pipeline 52 (see Figures 6,7 and 9).

At its highest point, the vessel 10 has an integral, externally threaded neck 22 onto which is screwed a cap 24 having an internal O-ring seal and a nipple 26 of the same type as the nipple 20. In use, the nipple 26 has connected to it a flexible line 28 (see Figures 6,7 and 9) leading to the pipeline 52.

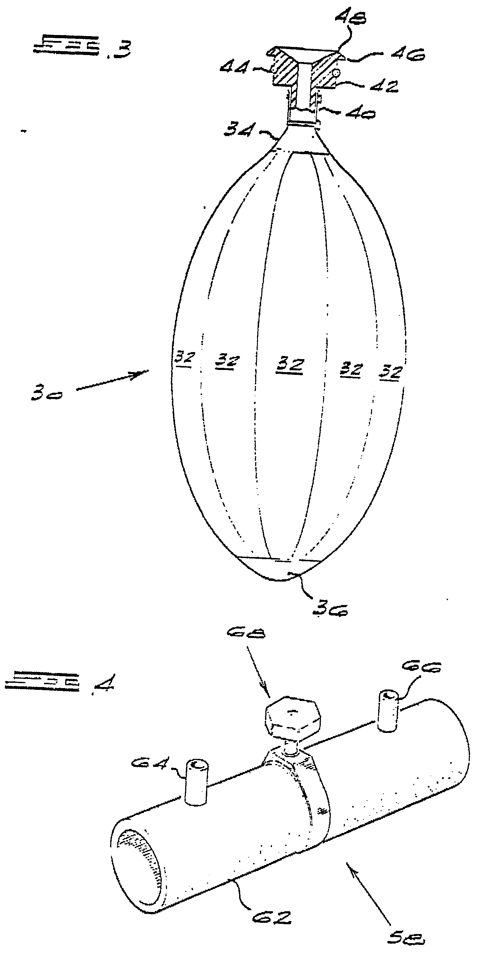

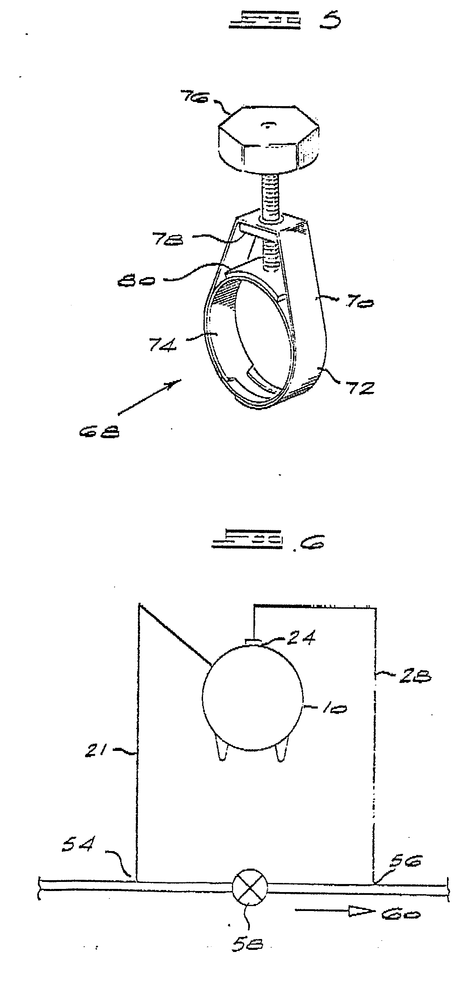

Inside the vessel 10, there is a flexible bladder 30 formed of laminated PVC (polyvinyl chloride). As seen in Figure 3, the bladder is composed of a series of panels 32 which are heat-seamed to one another. Each panel is defined by edges of curvilinear shape and the bladder has patches 34,36 heat-seamed to the panels 32 at the points of convergence of the edges. When the bladder is full, it has a perfectly spherical shape. A space 38 surrounds the bladder when it is full in the vessel 10.

Communicating with the interior of the bladder through the upper patch 34 is a spigot 40 to which is fixed a hollow plug 42 having an annular recess accommodating an O-ring seal 44. The upper end of the plug has a lip 46 which seats on the upper edge of the neck 22 with a chamfered surface 48 of the lip bearing against the O-ring seal 26.

Figure 6 shows one application of the apparatus where continuous dosing of a liquid conveyed in a pipeline 52 by means of a dosant is to be carried out. At the start of operations, the bladder 30 is filled with the dosant and the lines 21 and 28 are connected to the pipeline at points 54 and 56 upstream and downstream respectively of a manually operable valve 58. The direction of liquid flow in the pipeline is indicated in Figure 5 by the arrow 60.

If the valve 58 is partially closed, a pressure differential is created across the valve, with the upstream pressure being higher than the downstream pressure. Pressure liquid flows through the line 21 and fills the space 38, exerting pressure on the bladder which gradually collapses it and expels its contents through the line 28 into the pipeline 52 downstream of the valve 58. The rate of dosing is proportional to the pressure differential, so by correctly setting the valve 58, the user is able to control the dosing rate accurately.

The function of the air release valve 18 is to permit air to escape from the space 38 when liquid first flows into the space through the line 21.

It is important for the vessel 10 and for the bladder when full to have spherical shapes, since in this way an equal pressure distribution can be obtained over the whole bladder surface, leading to uniformity in the dosing rate. It has also been found that the particular panel configuration used for the bladder is important for achieving a uniform rate of collapse of the bladder.

In some applications, a manually operable gate valve or other conventional valve can be used for the valve 58. However, it is preferred to use a squeeze valve such as that seen in Figure 4. This valve includes a tube 62 of flexible material, such as silicon rubber. Two spaced, integral nipples 64,66 communicate with the tube 62. An annular squeezing device 68 is fitted about the tube 62 between the nipples 64 and 66. This device is seen in Figure 5 to include a single band 70 of stainless steel which is arranged to form two loops 72 and 74. A screw 76 is threaded through a nut 78 fixed to the outer loop and bears on a plate 80 fixed to the inner loop. In the result, as the screw is threaded further and further through the nut, the inner loop gets smaller and smaller, at all times remaining circular in shape. Thus, the bore of the tube 62 beneath the device 68 remains circular at all times, but is variable in diameter. Since the circular shape of the length 62 is maintained as the diameter is varied, smooth laminar flow is also maintained, and hence there is a uniform pressure drop.

In use of the squeeze valve 58 seen in Figure 4, the tube 62 is connected into the pipeline, and the lines 21 and 28 are connected up to the nipples 64 and 66, respectively. By varying the diameter of the flow passage by appropriate manipulation of the screw 76, close control can be maintained over the dosing rate.

Figure 7 shows another application of the apparatus where continuous dosing takes place. A squeeze valve 58 of the Figure 4 type is again used to create the desired pressure differential, but there is also a conventional needle valve 82 associated with a rotameter 83 in the pressure line 21. By appropriate setting of the needle valve, the flow rate in the pressure line can be controlled, and the rotameter enables an operator to determine the flow rate with accuracy. In other respects, the apparatus of Figure 7 is identical to that of Figure 6. Note that the rotameter will also give an immediate indication if flow in the pipeline 52 should cease for any reason.

There are a great number of situations in which continuous dosing may find application. One such application is in the dosing of water with iodine for the treatment of a cow's teats before or after milking. Another is in the dosing of water with plant nutrients or fertilizers in the agricultural industry. Yet another is in the dosing of swimming pool water with the necessary chemicals, such as iodine.

in each such case, the appropriate setting of the valve 58 will be made to achieve the correct dosing rate. On the basis of the known dosing rate and known initial volume of the bladder 30, an operator will be able to determine how long the apparatus can remain in operation before the contents of the bladder will have to be replenished. In practice, once a bladder has been in use for some time and it is known that the dosant supply is almost gone, the bladder will be refilled through the plug 42 once the outlet 12 has been opened to permit liquid to escape from the space 38.

There are also applications in which intermittent dosing is desirable.

Figure 9 illustrates one apparatus suitable for intermittent dosing. In this case, a tank 86 holding a large volume of dosant liquid is connected to the nipple 20 via a line 88 controlled by a solenoid valve 90 which receives control signals from a microprocessor 92. The microprocessor 92 also sends control signals to solenoid valves 94, 96 located in the lines 21 and 28 and a solenoid valve 98 controlling the outlet 12 from the vessel 10. A manually operable valve 58 of Figure 4 type is used to set the pressure reduction in the pipeline 52.

In operation, during dosing, the valves 90 and 98 are closed. When a dosing cycle is completed, all valves are closed. When the bladder in the vessel 10 requires replenishment, the valves 90 and 98 are opened and the other valves are closed. Water in the vessel 10 surrounding the bladder can run out of the vessel, and replenishment of the bladder takes place through the line 88. In each situation, the opening and closing of the various valves is controlled in accordance with a predetermined sequence, by the microprocessor 92.

Figure 8 illustrates one form of solenoid valve suitable for use in this type of application. The solenoid valve has an armature 100 surrounded by a coil 102 which is energised or de-energised in accordance with signals from the microprocessor 92. When the coil is energised, the armature is drawn into the coil against the force of a compression spring 104 and, when it is de-energised, the spring urges the armature out of the coil so that a plate 106 at its end squeezes a flexible tube 108 connected into the relevant line against a fixed plate 110. The tube 108 is formed of silicon rubber, and the spring force is chosen so that it will be overcome if line pressure should be excessive.

Note that the valve 58 in Figure 9 could also be a solenoid or other valve which is adapted to be controlled automatically in accordance with the predetermined cycle.

Figure 10 illustrates schematically a chlorination system for a swimming pool 120. As is conventional, the pool 120 has an overflow weir 122 from which water is drawn by a pump 124 driven by a motor 126. From the pump, the water is passed to a filter 128 after which it is returned to the pool. According to the invention, a chlorine dosing apparatus 130 is incorporated into the normal swimming pool water recirculation system.

A pressure line 21 is connected to the process line 52 between the pump 124 and the filter 128, and proceeds to the vessel 10 of a dosing apparatus of the type described previously. The bladder 30 is filled with sodium hypochlorite solution at the correct concentration. The pressure drop across the filter causes the dosant liquid to be expelled into the line 52 downstream of the filter 128 at a rate depending on the pressure drop and on the setting of a solenoid valve 130 in the line 28. The setting of the solenoid valve 130 is controlled by the microprocessor 132.

In a typical swimming pool, the pump 124 is operated intermittently in accordance with a predetermined timing cycle. When the pump first starts up at the commencement of a new pumping cycle (eg early in the morning), the pump casing and line 52 will be empty. It takes some time for the pump to prime and pressurise the system. The microprocessor therefore includes a first timer unit 134 which receives a start-up signal from the motor 126 and which keeps the valve 130 closed until a predetermined time interval, sufficient to allow priming and pressurisation to take place, has passed. The valve is then opened for dosing to commence.

The microprocessor 132 also includes a second, manually adjustable timer unit 136 which takes over control of the solenoid valve to control opening and closing thereof in accordance with a predetermined sequence. In winter, the chlorine requirements of a swimming pool will be less than in summer. Typically, the winter requirement will be half of the summer requirement. The microprocessor therefore includes a control unit 138 which can be actuated at the start of winter to halve the dosage.

Some algal strains are able to develop a resistance to chlorine over a period of time, and it then becomes necessary to use a shock dose. The microprocessor therefore includes a further control unit 140 which can be actuated to hold the solenoid valve 130 fully open for a predetermined period sufficient to shock-dose the pool.

In the chlorination application of Figure 9, the bladder 30 should be of a material which is resistant to chemical attack by the dosant. PVC is a suitable material. Also, it should be possible for a small amount of reverse osmosis to take place between the interior of the bladder and the space 38, to inhibit algae growth in the space 36.

An important feature of the vessel 10 is the fact that the outlet 12 is positioned some distance above the lowest level of the vessel. It will, in fact, be above the level of the bottom end of the bladder 30 when the bladder is collapsed. With the outlet 12 so positioned, the vessel 10 will not be emptied completely during refilling operations, and the volume of liquid remaining in the vessel will provide some support to the bladder as it is refilled.

If, for some reason, there should be a line blockage in the pipeline downstream of the apparatus, the pressure will be constant throughout, and the apparatus will therefore cease its dosing function.

An advantage of the invention over other types of dosing apparatus using venturis is the fact that it will dose efficiently even where there are very low liquid flow rates in the system supply line.

CLAIMS

1.

For dosing a liquid flowing in a pipeline with a dosant liquid, apparatus comprising a rigid, hollow, spherical vessel, a collapsible bladder inside the vessel for containing the dosant liquid, the bladder being spherical when full, means for location in the pipeline for creating an adjustable pressure differential across the means when liquid flows in the pipeline, the pressure upstream of the means being greater than the pressure downstream of the means, a first conduit for placing the interior of the vessel outside the bladder in communication with the pipeline upstream of the means, and a second conduit for placing the interior of the bladder in communication with the pipeline downstream of the means so that the pressure differential acts on the bladder to collapse it and expel its contents through the second conduit into the pipeline at a rate dependent on a chosen pressure differential created by the means.

2.

The apparatus of claim 1, in which the bladder is adapted to collapse, when subjected to the pressure differential, at a uniform rate.

3.

The apparatus of claim 2, in which the bladder comprises a series of panels which are sealed together and which are each defined between curvilinear edges.

4.

The apparatus of any one of the preceding claims, and including a valved outlet from the vessel for the escape of liquid from the vessel, the outlet being situated at a level above that of the operatively lowest point of the vessel.

5.
The apparatus of any one of the preceding claims and including an air release valve communicating the interior of the vessel outside the bladder with the ambient atmosphere at a level near to the operatively uppermost point of the vessel.

6.
The apparatus of any one of the preceding claims, in which the means for creating the pressure differential in the pipeline includes a squeeze valve.

7.
The apparatus of claim 6, in which the squeeze valve includes a circular cross-section tube of resilient material for connection into the pipeline and a squeezing device for varying the flow area through the tube while maintaining the circular cross-section of the tube.

8.
The apparatus of claim 7, in which the resilient material is silicon rubber.

9.
The apparatus of any one of the preceding claims, in which the bladder is formed of PVC.

10.
The apparatus of any one of the preceding claims and including a flow control valve in the first conduit.

11.
The apparatus of claim 10 and including a flow motor in the first conduit.

12.

Swimming pool chlorination apparatus for use with a swimming pool reticulation system in which water is pumped along a pipeline through a filter, the chlorination apparatus including a rigid, hollow, spherical vessel, a collapsible bladder inside the vessel for containing a chlorinating dosant liquid, the bladder being spherical when full, a first conduit for placing the interior of the vessel outside the bladder in communication with the pipeline upstream of the filter, and a second conduit for placing the interior of the bladder in communication with the pipeline downstream of the filter so that the pressure differential created in the pipeline by the filter acts on the bladder to expel its contents into the pipeline downstream of the filter.

13.

The swimming pool chlorination apparatus of claim 12 in which the bladder is adapted to collapse when subjected to the pressure differential, at a uniform rate.

14.

The apparatus of claim 13, in which the bladder comprises a series of panels which are sealed together and which are each defined between curvilinear edges.

15.

The apparatus of any one of claims 12 to 14, and including a valved outlet from the vessel for the escape of water from the vessel, the outlet being situated at a level above that of the operatively lowest point of the vessel.

16.

The apparatus of any one of claims 12 to 15 and including an air release valve communicating the interior of the vessel outside the bladder with the ambient atmosphere at a level near to the operatively uppermost point of the vessel.

17.

The apparatus of any one of claims 12 to 16 and including a solenoid valve in the second conduit and a microprocessor arranged to control the solenoid valve in accordance with a predetermined cycle.

18.

The apparatus of claim 17, in which the microprocessor is adapted to close the solenoid valve until a predetermined time interval has lapsed after a pump which pumps the water through the filter has been actuated.

19.

The apparatus of any one of claims 12 to 18, in which the bladder is formed of a material which will permit some reverse osmosis of dosant to take place from the interior of the bladder into the vessel outside the bladder to inhibit algae growth in the vessel.

20.

The apparatus of claim 19 in which the material of the bladder is resistant to sodium hypochlorite and is preferably formed of PVC.

1

0164897

26
22
28
18
24
21
20
10
16
12
14
Fig. 1
11 11 11

28
18
24
21
20
10
30
38
30
Fig. 2

0164897

FIG.3

48

46

44

42

40

34

30

32  32  32  32  32

36

FIG.4

68

66

64

62

58

0164897

Fig. 5

Fig. 6

4

0164897

FIG.7

FIG.8

Fig. 9

0164897

FIG. 10

6

52

128

52

124

122

126

21

130

134

138

140

136

10

30

130

120